# EUROPEAN PATENT APPLICATION

(11) **EP 4 356 751 A2**
(43) Date of publication of application: **24.04.2024**
(21) Application number: 24162635.7
(22) Date of filing: 29.08.2008
(51) Int. Cl.: A23K 50/40

(54) **SINGLE-SERVE CAT FOOD PRODUCT AND METHODS FOR SAME**

(30) Priority: 29.08.2007 US 968829 P
(62) Divisional of application: 21150264.6
(71) Applicant: MARS INCORPORATED, McLean, VA 22101 (US)
(72) Inventor: FRANKS, Jerry, McLean, 22101 (US); BIERER, Tiffany, McLean, 22101 (US); SHIELDS, Francis, McLean, 22101 (US); COLLIER, Alessandra, McLean, 22101 (US); WILLCOCKS, Neil, McLean, 22101 (US)
(74) Representative: Carpmaels & Ransford LLP

(57) **Abstract**

The inventors have discovered cats' preferred serving sizes. A packaged, multi-meal, unitized cat food product includes one or plural containers of cat food having of a mass that cats naturally consume in one sitting. A method of providing single-serving of pet food may include thermal processing of the single-serve containers or sterile filling of the containers.

## Description

### CROSS-REFERENCE TO RELATED APPLICATIONS

This application claims the benefit of U.S. Provisional application number 60/968,829 filed August 29, 2007, which is incorporated by reference herein in its entirety.

### TECHNICAL FIELD

The present invention relates to pet food, and more particularly, to complete and balanced, cat food products and related methods.

### BACKGROUND

Pet foods are generally classified into three types by their water content: dry pet foods, semi-moist pet foods, and high water content pet foods. Dry pet foods generally have a water content of less than about 15% by weight. Semi-moist pet foods generally have a water content of 15%-55% by weight. Pet foods with a water content of greater than 55%, and more specifically in the range of about 65-95%, are classified as high water content or wet pet foods. The phrase "complete and balanced," as used herein, is in general accordance with the description in National Research Council, Nutrient Requirements of Dogs and Cats, The National Academies Press (2006), Washington D.C.; Association of American Feed Control Officials Incorporated, Official Publication (2007); or other industry body in the U.S. or applicable country. Further, a food is to be distinguished from what is referred to as "snacks" or "treats" by persons familiar with pet food science. Generally, the smallest serving size available for a complete and balanced, semi-moist or wet cat food is about 3oz. - 4oz (85 grams to 113 grams).

Pet food, and particularly for the subject of this disclosure cat food, is the subject of research into the general effectiveness at delivering nutrition, which encompasses issues of nutrient content, palatability, freshness, and the like. The inventors have discovered insights into cats' preferred eating habits, especially that cats prefer their meals in small discrete segments. The invention is a manifestation of the inventors' discoveries and insights relating cats' preferences.

### SUMMARY

This Summary is provided to introduce a selection of concepts in a simplified form that are further described below in the Detailed Description of Illustrative Embodiments. This Summary is not intended to identify key features or essential features of the claimed subject matter, nor is it intended to be used to limit the scope of the claimed subject matter.

An aspect of the present invention is directed to a complete and balanced semi-moist or wet cat food product in a serving size that is suited for consumption according to a cat's natural feeding pattern. Thus, according to an embodiment of the invention, a complete and balanced semi-moist or wet cat food is packaged in a 10g - 40g serving size. For example, a packaged, multi-meal, unitized cat food product is provided that includes: a plurality of sealed containers, each one of the containers assembled or configured into a single package or group of containers; each one of the containers including a unit of commercially sterile, complete and balanced cat food having a mass of at least 10 grams and no more than 40 grams; and the cat food having a moisture content of at least 15 percent by weight of the food. Also, the cat food product may be packaged in a single unit of a 10g to 40 gram serving size.

Preferably, the cat food is shelf stable. The cat food may be filled in aseptic or sterile conditions or retorted in the containers. The cat food preferably has a mass of at least 15 grams and no more than 40 grams, more preferably, at least 20 grams and no more than 35 grams, and even more preferably at least 20 grams and no more than 30 grams.

A method of feeding a cat is also provided that includes: providing plural containers, each of which has a capacity of at least 10 grams; filling the container with at least 10 grams and no more than 40 grams of a complete and balanced cat food; sealing the containers; after the filling and sealing steps, heating the container to at least partially cook or sterilize the pet food; and after the heating step, providing the containers of pet food in a package such that each container of the package may be individually opened.

Another method of feeding a cat includes: providing plural containers having a capacity of at least 10 grams; filling each container with at least 10 grams and no more than 40 grams of a commercially sterile complete and balanced cat food; sealing the container; and providing the containers of pet food in a package such that each container of the package may be individually opened.

Preferably, the containers are sized with a maximum capacity of about 40 grams and to enable the cat to finish eating the food before certain characteristics of the food degrade to unwanted levels. The degrading characteristics include decrease in palatability, decrease in moisture content, oxidation of lipids or flavorants, decrease in volatile compounds, loss or degradation of odor components, increase in malodorous compounds, color degradation, and/or loss or degradation of texture components. Preferred container capacities are as provided above.

The multi-meal semi-moist or wet cat food product may b configured as a plurality of individually packaged single-serving units that are integrated together into a larger package. Thus, in one embodiment, the multi-meal semi-moist or wet cat food product may be designed to provide an optimal daily diet for a cat in a variety of flavors.

### BRIEF DESCRIPTION OF THE DRAWINGS

Figure 1 is a chart illustrating cats' preferred meal sizes;
Figure 2 is a chart illustrating the decrease in moisture of a commercially available pet food over time; and
Figure 3 is a chart illustrating cats' preference for recently exposed food.

### DETAILED DESCRIPTION OF ILLUSTRATIVE EMBODIMENTS

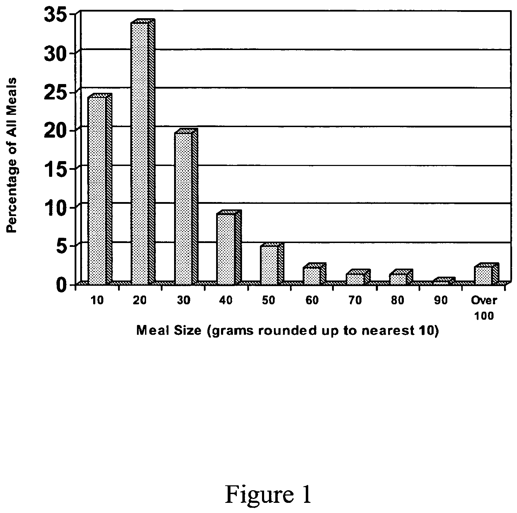

The inventors have studied the natural feeding patterns of cats and discovered that cats on average prefer particular sized servings of cat food. In one study, cats were fed a complete and balanced cat food to examine the cats' natural feeding patterns. The cats in the group ate as many as sixteen meals over a 21-hour period and averaged 7 meals per 21-hour period. Further, over 80% of the cats in the group ate between about 10g - 40g (0.35oz. - 1.41oz.) of food per meal and the entire group of cats averaged about 24g (0.85oz.) of food per meal, which equates to an average caloric intake of about 28 Kcal per meal. Figure 1 is a bar graph summary of the study that shows meal sizes in grams (rounded up to the nearest 10 grams) and the respective frequency at which the cats ate, as expressed in percentage of all the meals eaten. Also, the assignee of the invention gathered data concerning how cat owners feed their cats. The data shows that even when feeding from smaller packages (for example, 3oz. - 4oz.) of wet cat food, less than half of the cat owners fed their cats the entire package. In this regard, of the owners who fed their cats wet food packaged in small containers (3oz. - 4oz can or pouch), only 40% fed their cats the full package, 2% fed about three-quarters of the package, 27% fed about half the package, and 31% fed one-quarter or less of the package. The data showed that the average amount of wet cat food that owners fed their cats was 57g. Also, the assignee of the present invention gathered data concerning how owners handle the unused portion of the wet cat food. Of the owners who fed their cats only a portion of the cat food package, 60% stored the remaining cat food in the original container and refrigerated it, 18% stored the remaining cat food in the original container and did not refrigerate it, 3% stored the remaining cat food in another container and refrigerated it, 1% stored the remaining cat food in another container and did not refrigerate it.

Accordingly, the inventors concluded that the commonly available, single-serving packages provide more semi-moist or wet cat food than both (i) cats naturally prefer to eat in a single meal and (ii) cat owners prefer to feed in a single meal. Additionally, there are other problems associated with the commonly available single-serving portions of semi-moist and wet cat food.

For example, refrigerated cat food served immediately to a cat has decreased palatability. The assignee of the present invention has studied the effect of serving temperature on the palatability of wet cat food. In this regard, the palatability of wet cat food is reduced when served at 3°C compared to 20°C. Thus, the data shows that refrigerated wet cat food, served while still cold, is less palatable than cat food served at room temperature.

Furthermore, pet meals (for example, cat food meals) that are exposed to air at ambient conditions for extended periods prior to consumption by a pet, or the previously opened but unfed portion, often undergo undesirable chemical and physical changes and microbiological contamination. These changes can have a significant negative effect in the palatability of the meal to the pet and the nutritional value of the meal, and pose microbiological hazard to the pet.

### Chemical Changes

Chemical changes to cat food exposed to ambient conditions include nutritional degradation and oxidation. In this regard, pet meals are typically designed to contain several ingredients to provide nutrition, palatability, and overall visual appeal to the pet and/or pet owner. For example, several micronutrients, such as vitamins, and minerals are often added to provide a balanced nutritional meal to the pet. However, once the pet meal is removed from the protective packaging and exposed in a serving dish, changes in these components can take place. Oxygen uptake occurs in pet foods rapidly. For example, a 50 gram sample of typical pet food ingredients absorbs 950 milligrams of oxygen in approximately 10 hours. Also, vitamins (A, E) tend to degrade when exposed to light and oxygen at rapid rates, thereby compromising the nutritional content of the food to the pet. In particular, carotenoid components (Vitamin A) are photosensitive, and tend to degrade when exposed to excessive light.

Pet meals also contain fats, oils and natural or prepared flavorants which are protected from oxidation while sealed in the original packaging. However, when these components are exposed to air and elevated temperatures, the lipid components can undergo oxidation and tend to make the meal less palatable or non-palatable.

### Physical Changes

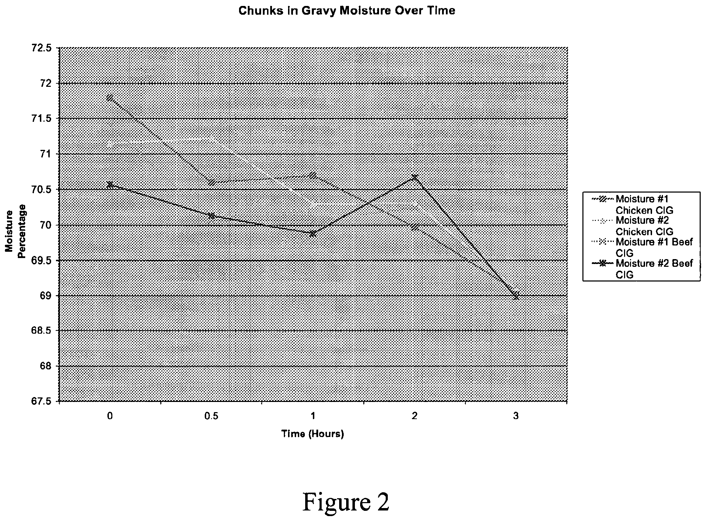

Physical changes to cat food exposed to ambient conditions include drying and loss of volatiles by evaporation. In this regard, when wet pet meals are exposed to ambient conditions, the meal components can dry up and therefore decrease the meal palatability to the pet. Specifically, wet meals for pets are traditionally offered in 2 formats: loaf and chunks in gravy. These formats will both lose moisture when exposed to air, though a chunk in gravy format will lose moisture from the gravy at a very high rate in addition to the losses that occur from the chunks. The chunks lose moisture and degrade in a manner similar to when a wet cat food in a loaf format is exposed to air. For example, Figure 2 illustrates the decrease of moisture content over time for two varieties of commercially available chunk in gravy cat food -- chicken and beef. The table provides the total loss of moisture as a weight percent (dry basis) for each variety over three hours.

**Table: Moisture Content Over Time**

| | **Percent Moisture** | | | | | **0 hr-3hr Difference Loss from Initial Time to Final** |
|---|---|---|---|---|---|---|
| **Time (Hours)** | **0** | **0.5** | **1** | **2** | **3** | |
| **Moisture #1 Chicken CIG** | 71.79 | 70.6 | 70.7 | 69.97 | 69.07 | 2.72 |
| **Moisture #2 Chicken CIG** | 71.15 | 71.22 | 70.3 | 70.31 | 69.11 | 2.04 |
| **Moisture #1 Beef CIG** | 71.4 | 70.06 | 70.06 | 70.24 | 69.13 | 2.27 |
| **Moisture #2 Beef CIG** | 70.57 | 70.13 | 69.88 | 70.67 | 68.98 | 1.59 |

Moreover, because a wet meal may dry near its exposed surfaces, the pet food may develop a skin or crust. The crusting or skinning associated with drying may form tougher textures which are not palatable by feline pets, especially because cats, due to their design of teeth and the structure of tongue, are not good chewers of a meal and instead tend to bite and swallow meal components. The formation of a skin or crust can adversely affect the methods loaf format meals can be consumed by a cat. In chunks and gravy format meals, the chunk components can dry out when exposed to dry air conditions. The chunks can in turn become tough textured and lose palatability, to cats especially, due to chewiness in product texture. The gravy component of a meal can dry out fairly rapidly when exposed to dry air conditions, possibly causing the gravy component to become sticky and in turn cause salt and mineral components to crystallize or sediment out of the gravy system with time. Also, fats and oils can be destabilized from gravy systems due to loss in emulsified structure, causing fats to be expressed out with time, and in turn affecting the gravy palatability.

Some ingredients in pet foods are incorporated for pleasant aroma in the pet meal both for the pet's benefit and for the pet owner's benefit. These aromatic compounds in wet meals typically are readily volatilized during exposure to air, and dissipate if exposed to airs for extended times. The wet meals can lose the attractiveness to the pet due to the loss in aroma. This effect can be intensified during extreme dry or heated air conditions, as for example during summer windy days.

### Microbiological Contamination

Exposed wet meals pose a risk of microbiological contamination. This risk to microbiological growth in exposed cat meals increases rapidly, possibly exponentially, with time. Microbiological contamination to the wet cat meals can arise from several factors. Cats themselves carry a load of microbiological flora in their mouth, which when partly contacted with wet pet meals, can contaminate the pet meals. Some of the pathogenic microorganisms in a cat oral cavity include Pasteurella multocida, Staphylococcus aereus (Westling, K., et al., Journal of Infection, Vol 5(6)403-407). These microorganisms, when inoculated onto wet pet meals can rapidly grow and pose a microbiological risk to the pet when consumed at a later time. As an example, when a 200 microorganism load in a pet meal in left exposed at ambient conditions for a period of less than four hours, the microbiological count on the same food sample can reach in excess of 1 million bacterial cells over a period of four hours. This is due to the binary fission of bacterial cells at a very rapid rate at optimum conditions of microbiological growth (Doyle M.P et. al., Food Microbiology, 1997, page 17). Additionally, offensive or unattractive odors are presented to the pet and owner as microbiological or chemical degradation resulting from microbiological growth occurs. Many microbiological organisms produce sulfur or other sensory perceptive compounds as a result of the breakdown of food materials into microbiological by-products.

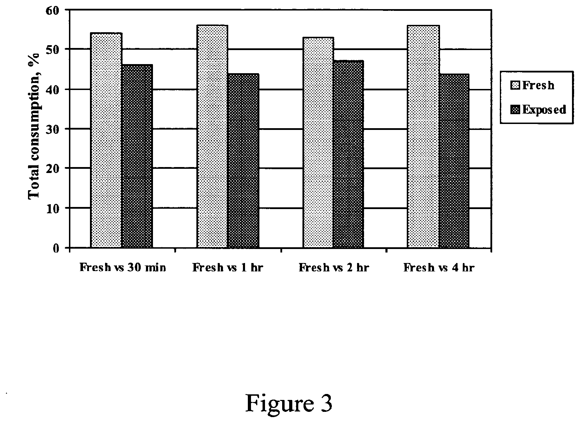

Figure 3 represents cats' preference for freshly opened wet cat food versus wet cat food that has been left open for 30 minutes, 1 hour, 2 hours, and 4 hours prior to feeding, illustrating that cats prefer freshly opened food over food that has been left open for a period of time.

The inventors have recognized that the commonly available serving sizes of complete and balanced, semi-moist and wet cat food products are not suitable for the natural feeding patterns of cats because they arc generally larger than a cat will cat in a single meal. As a result, current complete and balanced, semi-moist and wet cat food products are seldom entirely consumed by a cat in one meal. Thus, food remnants are either disposed or stored for later consumption. Disposing of remnants is wasteful and costly for the cat owner while storing remnants poses other problems because the food is subject to loss of palatability if refrigerated, and degradation and contamination, as described above, if not refrigerated. Thus, the invention provides a complete and balanced, semi-moist or wet cat food product that minimizes food waste and the need for storing food remnants.

According to one embodiment, a complete and balanced semi-moist or wet cat food is packaged in a 10g to 40g serving size. Cats have been shown to eat as little as 10g per feeding and even less. Thus, 10g has been established as the lower limit of the proposed range because it is a small serving size that is still functionally practical with respect to production, packaging, and handling. The 40g value has been established as the upper limit of the proposed range to accommodate owner feeding preferences, because owners are accustomed to feeding their cats an average 57g of food per feeding from the larger 3 ounce (85 gram) or 4 ounce (113 gram) container. Because the owner ultimately makes the cat food purchase, there may be some reluctance to purchase a cat food package that is substantially smaller than 57g. Thus, although the ideal single-serving portion for cats may be significantly less than 57g, it may be necessary, for numerous reasons, to package a cat food product in a larger serving portion so that a cat owner will purchase it. The upper range limit of 40 grams is considered to encompass cats' and owners' preferences. The present invention also encompasses wet cat food that is packaged of other sizes, including the range between at least 15 and no more than 40 grams, at least 20 and no more than 35 grams, and at least 20 and no more than 30 grams.

The serving size is presented herein as units of mass. The single-serve container has a corresponding capacity. Such a container would have a volume capable of receiving the desired cat food mass, have a headspace suitable for packaging, retort (if applicable), and other well-known considerations such that a person familiar with pet food packaging technology would understand the meaning of a container capacity.

The single serving (that is, in the mass range provided above) of complete and balanced semi-moist or wet cat food is preferably individually contained and provided in a unit that serves as a single cat meal. The single serving of cat food is placed in a sealed container and is subsequently made shelf stable or commercially sterile. As used herein, "shelf-stable" refers to food stored in a sealed, substantially airtight container without refrigeration required. The container may be made of plastic, metal, or any other suitable material, and may be sealed with a thermoplastic film, a foil, or a foil-plastic laminate. In a preferred embodiment, the container of cat food may be subjected to a retort process or otherwise made commercially sterile. Other well-known methods of making the package shelf-stable, such as aseptic filling, controlling inherent moisture content, moisture reduction and moisture control (e.g. binding of water using humectants, sugars, and salts), irradiation, acidification, adding of yeast and mold inhibitors, adding preservatives, and any combination(s) thereof are contemplated and encompassed by the present invention.

The smaller serving size of the present invention enables a shorter characteristic length from a core portion to the exterior of the container and often enables a larger surface area to volume ratio for a given container shape (compared to larger volumes). These factors facilitate commercial retort and sterilization processes. In this regard, during commercial retort and sterilization processes, food is heated externally through the boundary layers until the core or cold spot is heated to a specified, minimum temperature. Generally, in order for the core of a mass of food to reach a specified temperature, the boundary layers are exposed to high temperature for longer than optimum, which often results in the boundary layer being overcooked or degraded. For a given density of material, the single serving size container, because of its shorter characteristic distance to the central region (and possibly because of its larger surface area to volume ratio) exposes the boundary layer to high temperature for a shorter period of time compared with larger volume containers. Thus, a small mass of food may be commercially sterilized by heating the core to a specified temperature without overcooking or degrading the boundary layer of food in closest proximity to the heating medium.

The inventors surmise that the preference of cats for single serving sizes described herein may be partly due to the diminished drawbacks of heating a single serving size volume compared with heating a larger volume. Moreover, the shorter time exposure to retort temperatures may also, in addition to the undesirable physical, chemical, or microbiological changes of leftover food, be a factor in cats' preference for food ideally portion sized for consumption by the pet in one eating occasion, over food that is packaged in larger portions and portion sized for multiple eating occasions.

In accordance with an aspect of the invention, a plurality of individually packaged units of cat food may be assembled or integrated into a multi-meal package. For example, a number of individually packaged units of cat food may be bundled together into a single package that serves as a cat's entire daily diet. For example, several single serving containers may be configured together by shrink wrap, living hinges, tear away strips, tape, or any other attachment technology. Furthermore, each individually packaged unit may have a different flavor or different ingredients. Also, multi-meal packages may be designed for specific dietary needs of a cat, or provide inherently more variety to the diet, or provide inherently more variety to the diet. The present invention encompasses single, individually packaged units of cat food described herein.

In accordance with aspect of the invention, a method of providing a cat food is provided. According to the method, a cat is fed a complete and balanced semi-moist or wet food in a single serving such that the food is consumed before certain characteristics (described above) of the food degrade to unwanted levels. The method encompasses aseptic or sterile filing and/or retorting. The pet food mass and container size are described above. As described above, when wet food is exposed to air, several important compositional and sensory aspects of the food begin to degrade and, over time, will degrade to such levels that the food will lose its appeal to a cat. Primarily, exposed wet food becomes unappealing to a cat over time because of the reduction of certain volatile compounds that have been proven to affect cat feeding behavior. For example, moisture content levels may be reduced, which affects the taste and texture of the food in a manner that is not appealing to cats. Also, fat oxidation may occur, which results in loss of nutrients and creates off flavors that negatively affect the palatability of the food to a cat. Additionally, oxidized fats can have deleterious health effects, such as oxidation of cells, loss of nutrients in the body, and diarrhea.

This description illustrates aspects of the embodiments of the present invention. The present invention, however, is not limited to the particular embodiments stated herein, but rather encompasses reasonably variations as would be understood by a person familiar with pet food technology. Also, the description explains possible reasons for cats' preferences that are manifested in the present invention, but the present invention is not limited to or by the these explanations. Rather, the explanations are provided to round out the teaching of the present invention. A non-exhaustive list of aspects of the disclosure is set out in the following numbered clauses:
1. A packaged, multi-meal, unitized cat food product comprising:
   a plurality of sealed containers, each one of the containers assembled into a single package;
   each one of the containers including a unit of commercially sterile, complete and balanced cat food having a mass of at least 10 grams and no more than 40 grams;
   the cat food having a moisture content of at least 15 percent by weight of the food.
2. The cat food product of clause 1 wherein the cat food is shelf stable.
3. The cat food product of clause 2 wherein the cat food is shelf stable by retorting.
4. The cat food product of clause 1 wherein the cat food has a mass of at least 15 grams and no more than 40 grams.
5. The cat food product of clause 1 wherein the cat food has a mass of at least 20 grams and no more than 35 grams.
6. The cat food product of clause 1 wherein the cat food has a mass of at least 20 grams and no more than 30 grams.
7. The cat food product of clause 1 wherein the cat food is commercially sterile upon filling.
8. The cat food product of clause 1 wherein the cat food is made commercially sterile by retorting.
9. A unitized cat food product comprising:
   a sealed container housing a unit of commercially sterile, complete and balanced cat food having a mass of at least 10 grams and no more than 40 grams;
   the cat food having a moisture content of at least 15 percent by weight of the food.
10. The cat food product of clause 9 wherein the cat food is shelf stable.
11. The cat food product of clause 10 wherein the cat food is shelf stable by retorting.
12. The cat food product of clause 9 wherein the cat food has a mass of at least 15 grams and no more than 40 grams.
13. The cat food product of clause 9 wherein the cat food has a mass of at least 20 grams and no more than 35 grams.
14. The cat food product of clause 9 wherein the cat food has a mass of at least 20 grams and no more than 30 grams.
15. The cat food product of clause 9 wherein the cat food is commercially sterile upon filling.
16. The cat food product of clause 9 wherein the cat food is made commercially sterile by retorting.
17. A method of feeding a cat, comprising the steps of:
   providing plural containers having a capacity of at least 10 grams;
   filling each container with at least 10 grams and no more than 40 grams of a complete and balanced cat food;
   sealing the container;
   after the filling and sealing steps, heating the container to at least partially cook or sterilize the pet food;
   and after the heating step, providing the containers of pet food in a package such that each container of the package may be individually opened.
18. The method of feeding of clause 17 wherein each container, upon opening, is sized to enable the cat to finish eating the food before certain characteristics of the food degrade to unwanted levels.
19. The method of clause 18, wherein degrade means decrease in palatability.
20. The method of clause 18, wherein degrade means decrease in moisture content.
21. The method of clause 18, wherein degrade means oxidation of lipids or flavorants.
22. The method of clause 18, wherein degrade means decrease in volatile compounds.
23. The method of clause 18, wherein degrade means loss or degradation of odor components.
24. The method of clause 10, wherein degrade means an increase in malodorous compounds.
25. The method of clause 18, wherein degrade means loss or degradation of texture components.
26. The method of clause 17 wherein the providing step includes providing plural containers having a capacity of at least 15 grams and no more than 40 grams.
27. The method of clause 17 wherein the providing step includes providing plural containers having a capacity of at least 20 grams and no more than 35 grams.
28. The method of clause 17 wherein the providing step includes providing plural containers having a capacity of at least 20 grams and no more than 30 grams.
29. A method of feeding a cat, comprising the steps of:
   providing plural containers having a capacity of at least 10 grams;
   filling each container with at least 10 grams and no more than 40 grams of a commercially sterile complete and balanced cat food;
   sealing the container; and
   providing the containers of pet food in a package such that each container of the package may be individually opened.
30. The method of clause 29 wherein the providing step includes providing plural containers having a capacity of at least 15 grams and no more than 40 grams;
31. The method of clause 29 wherein the providing step includes providing plural containers having a capacity of at least 20 grams and no more than 35 grams.
32. The method of clause 29 wherein the providing step includes providing plural containers having a capacity of at least 20 grams and no more than 30 grams.

## Claims

1. A method of feeding a cat, comprising the steps of:
providing plural containers each of which has a capacity of at least 10 grams;
filling each container with at least 10 grams and no more than 40 grams of a complete and balanced cat food;
sealing the containers;
after the filling and sealing steps, heating the container to at least partially cook or sterilize the pet food, wherein said step of heating the container is retorting the container;
and after the heating step, providing the containers of pet food in a package such that each container of the package may be individually opened.

2. A method according to claim 1 which is a method of feeding a cat comprising the steps of:
providing plural containers each of which has a capacity of at least 10 grams;
filling each container with at least 10 grams and no more than 40 grams of a complete and balanced cat food;
sealing the containers;
after the filling and sealing steps, heating the container to sterilize the pet food, wherein said step of heating the container is retorting the container;
and after the heating step, providing the containers of pet food in a package such that each container of the package may be individually opened.

3. The method of feeding of claim 1 or claim 2, wherein the cat food has a moisture content of at least 15 percent by weight of the food.

4. The method of feeding of claim 1, 2 or 3, wherein the cat food is a semi-moist or wet cat food.

5. The method of feeding of any of claims 1-4 wherein each container, upon opening, is sized to enable the cat to finish eating the food before certain characteristics of the food degrade to unwanted levels.

6. The method of claim 5, wherein degrade means decrease in palatability.

7. The method of claim 5 or claim 6, wherein degrade means decrease in moisture content.

8. The method of any of claims 5-7, wherein degrade means oxidation of lipids or flavorants.

9. The method of any of claims 5-8, wherein degrade means decrease in volatile compounds.

10. The method of any of claims 5-9, wherein degrade means loss or degradation of odor components.

11. The method of any of claims 5-10, wherein degrade means an increase in malodorous compounds.

12. The method of any of claims 5-11, wherein degrade means loss or degradation of texture components.

13. The method of any of claims 1-12 wherein the providing step includes providing plural containers having a capacity of at least 15 grams and no more than 40 grams.

14. The method of any of claims 1-13 wherein the providing step includes providing plural containers having a capacity of at least 20 grams and no more than 35 grams.

15. The method of any of claims 1-14 wherein the providing step includes providing plural containers having a capacity of at least 20 grams and no more than 30 grams.
